# EUROPÄISCHE PATENTANMELDUNG

(11) **EP 1 455 530 A1**
(43) Veröffentlichungstag der Anmeldung: **08.09.2004**
(21) Anmeldenummer: 03100533.3
(22) Anmeldetag: 04.03.2003
(51) Int. Cl.: H04N 7/173, H04N 7/16, H04N 5/782

(54) **System zum Aufzeichnen und Wiedergeben von Fernsehsignalen mehrerer Fernsehkanäle**

(71) Anmelder: Swisscom AG, 3000 Bern 29 (CH)
(72) Erfinder: Lederman, Daniel, 3145 Niederscherli (CH); Trittibach, Stefan, 3073 Gümligen (CH); Marti, Urs-Viktor, 3018 - Bern (CH); Thyes, Olivier, 3072 Ostermundigen (CH)
(74) Vertreter: Scheuzger, Beat Otto

(57) **Zusammenfassung**

Es wird ein System (1) zum Aufzeichnen und Wiedergeben von Fernsehsignalen mehrerer Fernsehkanäle vorgeschlagen, welches eine mit einem Telekommunikationsnetz (3) verbindbare computerbasierte Steuerzentrale (10) und mehrere mit der Steuerzentrale (10) verbundene Fernsehempfänger (12, 13, ..., n) zum Empfangen der Fernsehsignale auf jeweils einem der Fernsehkanäle über Kabelfernsehnetze (6) und/oder Fernsehantennen (4, 5) für terrestrischen Fernsehrundfunk oder Fernsehsatellitenfunk umfasst. Das System (1) umfasst zudem mit den Fernsehempfängern (12, 13, ..., n) verbundene Codiermodule (121, 131, ..., n1) zum Codieren der empfangenen Fernsehsignale in ein Digitalformat. Die Steuerzentrale (10) ist eingerichtet zum Entgegennehmen von Aufzeichnungsinstruktionen von Benutzern über das Telekommunikationsnetz (3) und zum Speichern der im Digitalformat codierten Fernsehsignale, die zu einem durch die gespeicherten Aufzeichnungsinstruktionen bestimmten Zeitpunkt auf einem durch die gespeicherten Aufzeichnungsinstruktionen bestimmten Fernsehkanal empfangen wurden. Das System (1) umfasst zudem ein Wiedergabemodul (11) zum Übermitteln der im Digitalformat gespeicherten Fernsehsignale über das Telekommunikationsnetz (3) jeweils zur Wiedergabe auf einem Endgerät (2, 2', 2") eines betreffenden Benutzers. Das System (1) ermöglicht Benutzern, gleichzeitig Fernsehsignale mehrerer Fernsehkanäle aufzeichnen zu lassen, ohne selber über einen Video Recorder verfügen oder einen Video Recorder bedienen zu müssen.

## Beschreibung

### Technisches Gebiet

Die vorliegende Erfindung betrifft ein System zum Aufzeichnen und Wiedergeben von Fernsehsignalen mehrerer Fernsehkanäle. Die vorliegende Erfindung betrifft insbesondere ein System zum Aufzeichnen und Wiedergeben von Fernsehsignalen, die in mehreren Fernsehkanälen über Kabelfernsehnetze, über terrestrischen Fernsehrundfunk und/oder über Fernsehsatellitenfunk verbreitet werden.

### Stand der Technik

Vorrichtungen zum Aufzeichnen und Wiedergeben von Fernsehsignalen, die über Kabelfernsehnetze, terrestrischen Fernsehrundfunk und/oder über Fernsehsatellitenfunk verbreitet werden, sind schon seit Jahrzehnten als so genannte Video Recorder oder VCR (Video Cassette Recorder) bekannt. Diese herkömmlichen Video Recorder verfügen typischerweise über einen Fernsehempfänger und ein damit verbundenes, vom Benutzer programmierbares Aufzeichnungsgerät. Als Aufzeichnungsmedium werden in diesen herkömmlichen Video Recordern Kassetten mit Magnetbändern verwendet. Mit der Miniaturisierung der magnetischen Festspeicherplatten und der damit einhergehenden Vergrösserung des Speichervolumens und Preisreduktion war es nur eine Frage der Zeit bis auch Video Recorder mit Festspeicherplatten als Aufzeichnungsmedium auf den Markt kamen. Die Video Recorder ermöglichen den Benutzern Fernsehsignale von Fernsehsendungen aufzuzeichnen und zeitverzögert zu einem späteren Zeitpunkt wiederzugeben. Falls Benutzer gleichzeitig Fernsehsendungen von mehreren Fernsehkanälen aufzeichnen möchten, was insbesondere in Familien oder Wohngemeinschaften mit Benutzern unterschiedlicher Alters- und Interessengruppen nicht selten vorkommt, müssen sie über mehrere Video Recorders verfügen, die alle mit einer Fernsehsignalquelle verbunden werden müssen und Platz einnehmen. Die Programmierung der Video Recorder wird häufig von Benutzern als kompliziert und umständlich erachtet, oft scheitert beispielsweise eine geplante Aufzeichnung, weil die programmierbare Uhr des Video Recorders nicht korrekt eingestellt ist, weil ein anderer Benutzer die Programmierung einer geplanten Aufzeichnung unbeabsichtigt löscht oder deaktiviert, weil im entscheidenden Moment keine bespielbare Kassette eingelegt ist oder weil irgendeine andere Fehlmanipulation vorgenommen wurde.

In der Patentanmeldung US 2001/0047516 werden ein Verfahren und ein System beschrieben, welche Benutzern ermöglichen, digitale Audio-Video Daten, die zu einem bestimmten, einmaligen Zeitpunkt von einem Netzwerkserver im Streaming-Modus über das Internet verbreitet werden, zeitverzögert zu einem jeweils vom betreffenden Benutzer gewünschten späteren Zeitpunkt aus dem Internet zu beziehen. Gemäss US 2001/0047516 können die Benutzer die digitalen Audio-Video Daten, die sie zeitverzögert beziehen möchten, bestimmen, indem sie auf einem dafür vorgesehenen Server im Internet angekündigte Ereignisse auswählen, anlässlich derer die gewünschten digitalen Audio-Video Daten über das Internet verbreitet werden. Das System gemäss US 2001/0047516 ermöglicht die zeitverzögerte Übertragung von digitalen Audio-Video Daten, die im Streaming-Modus über das Internet verbreitet werden, es eignet sich jedoch nicht für die Aufzeichnung und Wiedergabe von Fernsehsignalen mehrerer Fernsehkanäle.

### Darstellung der Erfindung

Es ist eine Aufgabe der vorliegenden Erfindung, ein neues System zum Aufzeichnen und Wiedergeben von Fernsehsignalen vorzuschlagen, welches nicht die Nachteile des Stands der Technik aufweist und welches insbesondere zum Aufzeichnen und Wiedergeben von Fernsehsignalen mehrerer Fernsehkanäle geeignet ist.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Die oben genannten Ziele werden durch die vorliegende Erfindung insbesondere durch ein System zum Aufzeichnen und Wiedergeben von Fernsehsignalen mehrerer Fernsehkanäle erreicht, das eine mit einem Telekommunikationsnetz verbindbare computerbasierte Steuerzentrale umfasst, das mehrere mit der Steuerzentrale verbundene Fernsehempfänger zum Empfangen der Fernsehsignale auf jeweils einem der Fernsehkanäle umfasst, das ein oder mehrere mit den Fernsehempfängern verbundene Codiermodule zum Codieren der empfangenen Fernsehsignale in ein Digitalformat umfasst, und das ein Wiedergabemodul zum Übermitteln von in Digitalformat codierten Fernsehsignalen über das Telekommunikationsnetz jeweils zur Wiedergabe auf einem Endgerät umfasst. Die Fernsehempfänger sind vorzugsweise eingerichtet zum Empfangen digitaler und/oder analoger Fernsehsignale über Kabelfernsehnetze und/oder über Fernsehantennen für terrestrischen Fernsehrundfunk oder Fernsehsatellitenfunk. Die Steuerzentrale und das Wiedergabemodul sind beispielsweise jeweils auf verschiedenen, miteinander verbundenen Computern ausgeführt, wobei die Steuerzentrale und/oder das Wiedergabemodul Speicher zur Speicherung der im Digitalformat codierten Fernsehsignale umfassen.

Die oben genannten Ziele werden durch die vorliegende Erfindung zudem insbesondere dadurch erreicht, dass die Steuerzentrale eingerichtet ist zum Entgegennehmen von Aufzeichnungsinstruktionen von Benutzern über das Telekommunikationsnetz, zum Speichern der entgegengenommenen Aufzeichnungsinstruktionen, jeweils zugeordnet zu einer Benutzeridentifizierung des betreffenden Benutzers, und zum Speichern der im Digitalformat codierten Fernsehsignale, die zu einem durch die gespeicherten Aufzeichnungsinstruktionen bestimmten Zeitpunkt auf einem durch die gespeicherten Aufzeichnungsinstruktionen bestimmten Fernsehkanal empfangen wurden, jeweils zugeordnet zu der Benutzeridentifizierung, der die betreffenden gespeicherten Aufzeichnungsinstruktionen zugeordnet sind, und dass das Wiedergabemodul eingerichtet ist zum Übermitteln der im Digitalformat gespeicherten Fernsehsignale über das Telekommunikationsnetz jeweils zur Wiedergabe auf einem Endgerät des Benutzers, der durch die Benutzeridentifizierung identifiziert ist, die den betreffenden gespeicherten Fernsehsignalen zugeordnet ist. Der Vorteil des erfindungsgemässen Systems besteht insbesondere darin, dass eine Vielzahl von Benutzern gleichzeitig Fernsehsignale von mehreren Fernsehkanälen aufnehmen lassen können, ohne dass sie dazu selber über einen Video Recorder verfügen müssen. Die Steuerzentrale ermöglicht den Benutzern auf einfache und zuverlässige Art Fernsehsignale von gewünschten Fernsehsendungen aufzuzeichnen, ohne dass der Benutzer einen Video Recorder bedienen und programmieren muss, ohne dass der Benutzer den Zustand eines Video Recorders kontrollieren muss, ohne dass der Benutzer eine programmierbare Uhr des Video Recorders einstellen muss und ohne dass der Benutzer Aufzeichnungsmedien bereitstellen muss. Die Aufzeichnung und Wiedergabe der Fernsehsignale erfolgt zudem ortsunabhängig, das heisst, ein mobiler Benutzer kann Aufzeichnungsinstruktionen von einem beliebigen ersten Ort aus übermitteln und die Wiedergabe der im Digitalformat gespeicherten Fernsehsignale an einem beliebigen zweiten Ort ausführen lassen.

Vorzugsweise ist die Steuerzentrale eingerichtet, entsprechend den gespeicherten Aufzeichnungsinstruktionen jeweils Steuersignale an einen der verbundenen Fernsehempfänger zu übertragen zur Aktivierung des betreffenden Fernsehempfängers und/oder zur Selektion eines Fernsehkanals auf dem betreffenden Fernsehempfänger. Durch die Aktivierung respektive Deaktivierung der Fernsehempfänger mittels Steuersignalen und/oder durch die Selektion eines Fernsehkanals auf dem betreffenden Fernsehempfänger mittels der Steuersignale können die einzelnen Fernsehempfänger innerhalb eines Pools mehrerer Fernsehempfänger effizient nach Bedarf eingesetzt werden. Das heisst, ein deaktivierter, verfügbarer Fernsehempfänger wird nur dann aktiviert und auf einen bestimmten Fernsehkanal eingestellt, wenn dies entsprechend den gespeicherten Aufzeichnungsinstruktionen nötig ist.

Vorzugsweise ist das Telekommunikationsnetz ein Netz, das auf dem Internet Protokoll basiert, und das Wiedergabemodul ist eingerichtet, die im Digitalformat gespeicherten Fernsehsignale im Streaming-Modus über das Telekommunikationsnetz, insbesondere über das Internet, an die Endgeräte der Benutzer zu übermitteln. Durch die Verwendung des Internet Protokolls können mittels herkömmlicher mobiler oder fest installierter Internet-basierter Endgeräte einerseits die Aufzeichnungsinstruktionen überall eingegeben werden und andererseits die zentral aufgezeichneten Fernsehsignale weltweit bezogen werden. Durch die Verwendung des Streaming-Modus und durch Verwendung dafür geeigneter Wiedergabemodule bei den Endgeräten kann dem Benutzer das unrechtmässige lokale Kopieren bezogener digitaler Fernsehsignale verwehrt werden.

Vorzugsweise ist die Steuerzentrale eingerichtet, die im Digitalformat codierten Fernsehsignale vor deren Speicherung jeweils mit einem kryptografischen Schlüssel zu verschlüsseln, das System umfasst ein Zugriffskontrollmodul zum Erzeugen von Bezugsrechten auf die im Digitalformat gespeicherten Fernsehsignale und zum Übermitteln erzeugter Bezugsrechte, die die betreffenden kryptografischen Schlüssel umfassen, über das Telekommunikationsnetz an berechtige Benutzer, und das Wiedergabemodul ist eingerichtet, Bezugsrechte von Benutzern über das Telekommunikationsnetz entgegenzunehmen und entsprechend den entgegengenommenen Bezugsrechten die verschlüsselten, im Digitalformat gespeicherten Fernsehsignale an den betreffenden Benutzer zu übermitteln. Die Verschlüsselung der im Digitalformat codierten Fernsehsignale und die an Bezugsrechte bedingte Übermittlung verschlüsselter, im Digitalformat codierter Fernsehsignale ermöglicht eine gesicherte Zugriffskontrolle auf die im Digitalformat gespeicherten Fernsehsignale, wobei die Übermittlung der Bezugsrechte insbesondere kostenpflichtig gegen Verrechnung erfolgen kann und beispielsweise zu einmaligem oder mehrmaligem Bezug der im Digitalformat gespeicherten Fernsehsignale berechtigen kann.

In einer Ausführungsvariante ist das Wiedergabemodul eingerichtet, die im Digitalformat gespeicherten Fernsehsignale jeweils abhängig von Qualitätsparametern vom Endgerät des betreffenden Benutzers über das Telekommunikationsnetz an das Endgerät zu übermitteln. Dies hat den Vorteil, dass das Format und die Qualität der an ein Endgerät übermittelten, in Digitalformat codierten Fernsehsignale an die Eigenschaften des Endgeräts angepasst werden können, beispielsweise die Anzeigegrösse des Endgeräts oder die Bandbreite des Kommunikationskanals des Endgeräts.

Vorzugsweise umfasst die Steuerzentrale Fernsehprogramminformationen und die Steuerzentrale ist eingerichtet, von Benutzern Identifizierungsangaben von Fernsehsendungen als Aufzeichnungsinstruktionen über das Telekommunikationsnetz entgegenzunehmen und entsprechend den entgegengenommenen Identifizierungsangaben basierend auf den Fernsehprogramminformationen Aufzeichnungsinstruktionen mit Angaben über Fernsehkanal und Fernsehsendungsidentifizierung und/oder Startzeit/Endzeit respektive Zeitdauer zu speichern. Die Ableitung von Aufzeichnungsinstruktionen auf Grund von entgegengenommenen Identifizierungsangaben von Fernsehsendungen und gespeicherten Fernsehprogramminformationen hat den Vorteil, dass Benutzer weder Angaben über Fernsehkanal, noch Startzeit/Endzeit respektive Zeitdauer bestimmen müssen, sondern zur Bestimmung einer aufzuzeichnenden Fernsehsendung bloss Identifizierungsangaben von Fernsehsendungen, wie ein Titel oder eine Nummer, beispielsweise aus einer Liste, angeben müssen.

In einer Ausführungsvariante ist die Steuerzentrale eingerichtet, nach erfolgter Speicherung der im Digitalformat codierten Fernsehsignale, die entsprechend den gespeicherten Aufzeichnungsinstruktionen aufgezeichnet wurden, eine elektronische Bereitschaftsnachricht über das Telekommunikationsnetz an das Endgerät des Benutzers zu übermitteln, dessen Benutzeridentifizierung den betreffenden Aufzeichnungsinstruktionen zugeordnet ist. Durch die automatische Benachrichtigung erübrigen sich unnötige Anfragen durch den Benutzer bei der Steuerzentrale über den Status der per Aufzeichnungsinstruktionen in Auftrag gegebenen Aufzeichnungen.

In einer Ausführungsvariante ist die Steuerzentrale eingerichtet, im Digitalformat gespeicherte Fernsehsignale nach einer definierten Zeitdauer nach ihrer Speicherung automatisch zu löschen und die Steuerzentrale ist eingerichtet, vor der automatischen Löschung automatisch jeweils eine elektronische Warnnachricht über das Telekommunikationsnetz an das Endgerät des Benutzers zu übermitteln, dessen Benutzeridentifizierung den betreffenden gespeicherten Fernsehsignalen zugeordnet ist. Durch die automatische Löschung von im Digitalformat gespeicherten Fernsehsignalen können Speicherressourcen im System freigegeben und die Blockierung der Speicherressourcen durch "alte" im Digitalformat gespeicherte Fernsehsignale verhindert werden. Durch die automatische Warnnachricht kann die Anzahl Anfragen durch den Benutzer bei der Steuerzentrale bereffend das Verfalldatum der im Digitalformat gespeicherten Fernsehsignale reduziert werden.

Vorzugsweise ist die Steuerzentrale eingerichtet, die im Digitalformat codierten Fernsehsignale, die zu einem Zeitpunkt und auf einem Fernsehkanal empfangen wurden, die durch übereinstimmende Aufzeichnungsinstruktionen bestimmt sind, die von mehreren Benutzern entgegengenommen wurden, jeweils nur einmal den Benutzeridentifizierungen der betreffenden mehreren Benutzer gemeinsam zugeordnet abzuspeichern. Dadurch, dass im Digitalformat codierte Fernsehsignale auch für mehrere Benutzer nur einmal gespeichert werden, können im System Speicherressourcen gespart werden.

### Kurze Beschreibung der Zeichnungen

Nachfolgend wird eine Ausführung der vorliegenden Erfindung anhand eines Beispieles beschrieben. Das Beispiel der Ausführung wird durch die folgende einzige beigelegte Figur illustriert:

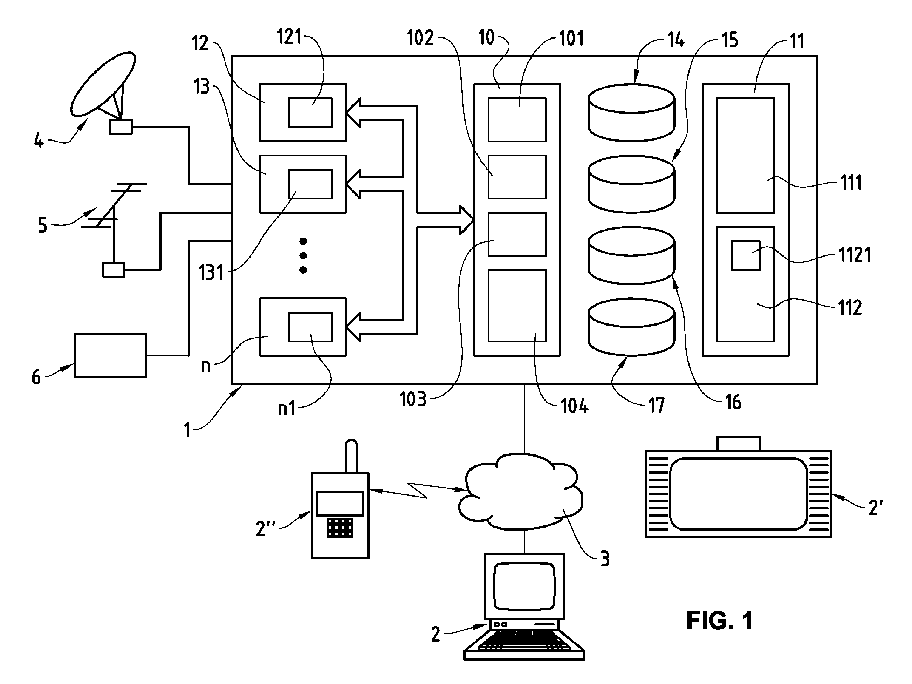

Figur 1 zeigt ein Blockdiagramm, welches schematisch ein System zum Aufzeichnen und Wiedergeben von Fernsehsignalen mehrerer Fernsehkanäle illustriert, das einerseits mit verschiedenen Quellen von Fernsehsignalen und andererseits über ein Telekommunikationsnetz mit verschiedenen Endgeräten verbunden ist.

### Wege zur Ausführung der Erfindung

In der Figur 1 bezeichnet das Bezugszeichen 1 ein System zum Aufzeichnen und Wiedergeben von Fernsehsignalen mehrerer Fernsehkanäle. Das System umfasst mehrere Fernsehempfänger 12, 13, ..., n zum Empfangen von digitalen Fernsehsignalen, z.B. DVB (Digital Video Broadcasting), und/oder analogen Fernsehsignalen, z.B. PAL (Phase Alternating Line), SECAM (Sequential Color Memory) oder NTSC (National Television Standards Committee), auf jeweils einem Fernsehkanal. Über die Fernsehempfänger 12, 13, ..., n ist das System 1 mit verschiedenen Quellen von Fernsehsignalen verbunden, insbesondere mit einer Fernsehantenne für Fernsehsatellitenfunk 4, das heisst mit einer Parabolantenne, mit einer Fernsehantenne für terrestrischen Fernsehrundfunk 5 und mit einem Kabelfernsehnetz 6.

Die Fernsehempfänger 12, 13, ..., n umfassen vorzugsweise jeweils ein Codiermodul 121, 131, ..., n1 zum Codieren der empfangenen Fernsehsignale in ein Digitalformat, beispielsweise MPEG2 (Moving Picture Expert Group 2), MPEG4 (Moving Picture Expert Group 4), DV (Digital Video) oder ein herstellerspezifisches Digitalformat von Firmen wie Real™ oder Microsoft™. Die Codiermodule 121, 131, ..., n1 können auch mit den Fernsehempfängern 12, 13, ..., n verbunden separat von den Fernsehempfängern 12, 13, ..., n ausgeführt werden. Einem Fernsehempfänger 12, 13, ..., n können auch mehrere Codiermodule 121, 131, ..., n1 zugeordnet werden oder empfangene Fernsehsignale von mehreren Fernsehempfängern 12, 13, ..., n können durch ein gemeinsames Codiermodul 121, 131, ..., n1 codiert werden.

Die Fernsehempfänger 12, 13, ..., n, respektive die Codiermodule 121, 131, ..., n1, sind mit der computerbasierten Steuerzentrale 10 verbunden. Die Steuerzentrale 10 umfasst einen oder mehrere miteinander verbundene Computer. Die Steuerzentrale 10 umfasst zudem ein Kommunikationsmodul zur Verbindung des Systems 1 mit dem Telekommunikationsnetz 3.

Das Telekommunikationsnetz 3 basiert vorzugsweise auf dem Internet Protokoll (IP) und ist mit dem weltweiten Internet und/oder mit einem oder mehreren Intranets verbunden. Das Telekommunikationsnetz 3 ermöglicht insbesondere die Verbindung des Systems 1 mit Endgeräten wie Personal Computers (PC) 2 oder Fernsehgeräten mit entsprechenden Set-Top-Boxen 2'. Das Telekommunikationsnetz umfasst zudem Mobilfunknetze, beispielsweise GSM- (Global System for Mobile Communication), UMTS- (Universal Mobile Telecommunication System) oder andere, beispielsweise satellitenbasierte Mobilfunknetze, zur Verbindung des Systems 1 mit mobilen Endgeräten 2", wie Mobilfunktelefone, Laptop- oder PDA-Computer (Personal Digital Assistant).

Die Steuerzentrale 10 umfasst mehrere programmierte Softwaremodule, deren Funktionen nachfolgend beschrieben werden.

Mittels des Instruktionsmoduls 101 nimmt die Steuerzentrale 10 Aufzeichnungsinstruktionen von Benutzern der Endgeräte 2, 2', 2" über das Telekommunikationsnetz 3 entgegen. Die Aufzeichnungsinstruktionen umfassen Identifizierungsangaben von Fernsehsendungen, die vom System 1 für den betreffenden Benutzer aufgezeichnet werden sollen. Die Identifizierungsangaben umfassen beispielsweise Titel oder Codewerte von Fernsehsendungen, die vom Benutzer eingegeben oder aus einer Fernsehprogramm- oder Fernsehsendungsliste des Instruktionsmoduls 101 ausgewählt werden. Die Fernsehprogramm- oder Fernsehsendungslisten werden auf Grund von gespeicherten Fernsehprogramminformationen 15 erzeugt. Die Identifizierungsangaben werden beispielsweise mittels eines so genannten Electronic Programming Guide (EPG) bestimmt. Bei der Erzeugung der Fernsehprogramm- oder Fernsehsendungslisten können zudem auch benutzerspezifische Profile mit Interessensangaben und/oder Angaben über das historische Benutzerverhalten aus einer Benutzerdatenbank 14 berücksichtigt werden. Auf Grund der entgegengenommenen Identifizierungsangaben und den Fernsehprogramminformationen bestimmt das Instruktionsmodul 101 Angaben über Fernsehkanal und Startzeit/Endzeit respektive Zeitdauer von Fernsehsendungen, die für den Benutzer aufzuzeichnen sind. Die Benutzer können auch Aufzeichnungsinstruktionen mit Angaben über Fernsehkanal und Startzeit/Endzeit respektive Zeitdauer von Fernsehsendungen an die Steuerzentrale 10 übermitteln.
Aufzeichnungsinstruktionen können auch Angaben für die Aufzeichnung von Serien umfassen, beispielsweise sämtliche Folgen einer Serie aufzeichnen, eine Serie oder einen definierten Zeitabschnitt periodisch bis auf Widerruf aufzeichnen oder eine bestimmte Anzahl mal aufzeichnen. Die Aufzeichnungsinstruktionen werden in einem durch das Bezugszeichen 16 bezeichneten Datenspeicher des Systems 10 gespeichert. Die Aufzeichnungsinstruktionen werden jeweils zugeordnet zu einer Benutzeridentifizierung des betreffenden Benutzers, von welchem die Aufzeichnungsinstruktionen entgegengenommen wurden, gespeichert. Die Benutzeridentifizierung wird beispielsweise vom Benutzer mit den Aufzeichnungsinstruktionen an die Steuerzentrale 10 übermittelt, sie wird auf Grund von Identifizierungsangaben des Benutzers aus der Benutzerdatenbank 14 entnommen und/oder durch die Steuerzentrale 10 basierend auf der Kommunikation mit dem Endgerät des Benutzers 2, 2', 2" bestimmt, z.B. auf der Basis einer Netzwerkadresse, einer Rufnummer oder einer IMSI (International Mobile Subscriber Identity).

Das Aufzeichnungsmodul 102 der Steuerzentrale 10 generiert entsprechend den im Datenspeicher 16 gespeicherten Aufzeichnungsinstruktionen Steuersignale zur Aktivierung eines verfügbaren Fernsehempfängers 12, 13, ..., n und/oder zur Selektion eines Fernsehkanals auf dem verfügbaren aktivierten Fernsehempfänger 12, 13, ..., n. Der Fachmann wird verstehen, dass die Fernsehempfänger 12, 13, ..., n auch permanent aktiviert und/oder fest einem definierten Fernsehkanal zugeordnet werden können. Je nach Ausführungsvariante werden zudem auch die Codiermodule 121, 131, ..., n1 aktiviert. Das Aufzeichnungsmodul 102 speichert die im Digitalformat codierten Fernsehsignale, die zu dem durch die betreffenden gespeicherten Aufzeichnungsinstruktionen bestimmten Zeitpunkt auf dem durch die betreffenden gespeicherten Aufzeichnungsinstruktionen bestimmten Fernsehkanal empfangen werden, im Aufzeichnungsspeicher 17. Die im Digitalformat codierten Fernsehsignale werden den Benutzeridentifizierungen zugeordnet gespeichert, die den betreffenden gespeicherten Aufzeichnungsinstruktionen zugeordnet sind, dabei werden die im Digitalformat codierten Fernsehsignale für mehrere Benutzer nur einmal im Aufzeichnungsspeicher 17 gespeichert.

Unter Zuhilfenahme des Verschlüsselungsmoduls 103 werden die im Digitalformat codierten Fernsehsignale vor der Speicherung mittels eines kryptografischen Schlüssels verschlüsselt.

Nach erfolgter Verschlüsselung und Speicherung der im Digitalformat codierten Fernsehsignale übermittelt das Aufzeichnungsmodul 102 eine elektronische Bereitschaftsnachricht über das Telekommunikationsnetz 3 an die Endgeräte 2, 2', 2" der betroffenen Benutzer, deren Benutzeridentifizierung den betreffenden gespeicherten Aufzeichnungsinstruktionen zugeordnet sind. Die Bereitschaftsnachricht ist beispielsweise eine E-Mail oder eine SMS-Nachricht (Short Message Service System).

Die Steuerzentrale 10 verfügt zudem über ein Löschmodul 104, welches die im Digitalformat gespeicherten Fernsehsignale eine definierte Zeitdauer nach ihrer Speicherung, beispielsweise nach einem Monat, automatisch löscht. Vor dem Verfalldatum übermittelt das Löschmodul 104 eine elektronische Warnnachricht über das Telekommunikationsnetz 3 an die Endgeräte 2, 2', 2" der betroffenen Benutzer, beispielsweise eine E-Mail oder eine SMS-Nachricht. Die betroffenen Benutzer können die im Digitalformat gespeicherten Fernsehsignale vor deren Löschung vom System 1 beziehen oder beispielsweise gegen eine Gebühr das Verfalldatum verlängern lassen.

Das System umfasst ein Wiedergabemodul 11 zum Übermitteln der im Digitalformat gespeicherten Fernsehsignale über das Telekommunikationsnetz 3 zur Wiedergabe auf einem Endgerät 2, 2', 2" eines Benutzers, der durch die Benutzeridentifizierung identifiziert ist, die den betreffenden im Digitalformat gespeicherten Fernsehsignalen zugeordnet ist. Das Wiedergabemodul 11 ist zusammen mit der Steuerzentrale 10 auf einem gemeinsamen Computer oder auf einem oder mehreren separaten Computern ausgeführt.

Das Wiedergabemodul 11 umfasst mehrere programmierte Softwaremodule, deren Funktionen nachfolgend beschrieben werden.

Mittels des Zugriffskontrollmoduls 111 erzeugt das Wiedergabemodul 11 Bezugsrechte für die im Digitalformat gespeicherten Fernsehsignale. Das Zugriffskontrollmodul 111 übermittelt die erzeugten Bezugsrechte, die jeweils den kryptografischen Schlüssel zur Entschlüsselung der betreffenden im Digitalformat codierten Fernsehsignale umfassen, über das Telekommunikationsnetz 3 an die Endgeräte 2, 2', 2" berechtigter Benutzer. Dabei können Gebühren erhoben und dem betreffenden Benutzer verrechnet werden. Die Bezugsrechte werden beispielsweise in Form digitaler Zertifikate, die elektronisch signiert sind, an die berechtigten Benutzer übermittelt. Bezugsrechte werden beispielsweise nur an diejenigen Benutzer übermittelt, die die Aufzeichnung der betreffenden im Digitalformat gespeicherten Fernsehsignale angefordert haben und denen die fälligen Gebühren verrechnet werden konnten oder deren Kreditwürdigkeit gewährleistet ist. Zur Verrechnung fälliger Gebühren ist das Zugriffskontrollmodul 111 vorzugsweise mit einem dafür geeigneten Verrechnungsmodul verbunden. Die Funktionen des Zugriffskontrollmoduls 111 sind entsprechend dem so genannten Digital Rights Management (DRM) ausgelegt.

Wenn ein Benutzer die im Digitalformat gespeicherten Fernsehsignale vom System 1 beziehen und auf seinem Endgerät 2, 2', 2" darstellen lassen möchte, übermittelt er eine entsprechende Anfrage mit dem betreffenden Bezugsrecht und einer Identifizierung der im Digitalformat gespeicherten Fernsehsignale an das System 1, wo sie vom Wiedergabemodul 11 entgegengenommen und weiterbehandelt wird. Eine solche Anfrage wird beispielsweise automatisch durch ein Softwaremodul in seinem Endgerät 2, 2', 2" erzeugt, wenn der Benutzer in einer Liste, die auf seinem Endgerät 2, 2', 2" dargestellt wird, eine Referenz auf die gewünschten im Digitalformat gespeicherten Fernsehsignale selektiert. Je nach Bezugsrecht ist ein Benutzer zu einmaligem oder mehrmaligem Bezug der im Digitalformat gespeicherten Fernsehsignale berechtigt.

Mittels des Übermittlungsmoduls 112 werden die verschlüsselten im Digitalformat gespeicherten Fernsehsignale über das Telekommunikationsnetz 3 zur Entschlüsselung und Wiedergabe an das Endgerät 2, 2', 2" des betreffenden Benutzers übermittelt. Die Übermittlung zur Wiedergabe erfolgt unter Verwendung von Flusskontrolle vorzugsweise im Streaming-Modus. Die Übermittlung zur Wiedergabe kann auch im so genannten Download-Modus erfolgen. Im Streaming-Modus werden Datenelemente der entschlüsselten, im Digitalformat gespeicherten Fernsehsignale in chronologischer Sequenz an die Endgeräte 2, 2', 2" übermittelt, wo sie durch ein Softwaremodul fortlaufend entgegengenommen, in einem Pufferspeicher zwischengespeichert, mit dem betreffenden kryptografischen Schlüssel entschlüsselt und optisch und akustisch wiedergegeben werden. Der Streaming-Modus ermöglicht jeweils eine einmalige Wiedergabe der im Digitalformat codierten Fernsehsignale auf den Endgeräten 2, 2', 2", ohne dass dabei die vollständige Datei mit den im Digitalformat gespeicherten Fernsehsignalen in den Endgeräten 2, 2', 2" gespeichert wird. Mittels eines Verrechnungsmoduls können nicht nur die bereits erwähnte Vergabe von Bezugsrechten an einen Benutzer und/oder Gebühren für getätigte Aufzeichnungen verrechnet werden, sondern es können auch bei jedem Bezug der im Digitalformat gespeicherten Fernsehsignale den betreffenden Rechtsinhabern Entschädigungen für ihre Urheberrechte gutgeschrieben werden.

An dieser Stelle soll zudem festgehalten werden, dass der Bezug und die Übermittlung der im Digitalformat gespeicherten Fernsehsignale nicht bloss nach der vollständigen Aufzeichnung der gesamten Fernsehsendung möglich ist, sondern dass im so genannten Time-Shift-Modus auf Anfrage auch während einer Aufzeichnung die bereits im Digitalformat gespeicherten Fernsehsignale laufend zur Wiedergabe an das Endgerät 2, 2', 2" des betreffenden Benutzers übermittelt werden können.

Vor der Übermittlung der im Digitalformat gespeicherten Fernsehsignale an die Endgeräte 2, 2', 2" wird durch die mit dem Bezugszeichen 1121 bezeichnete Softwarefunktion bestimmt, in welcher Qualität und/oder in welchem Format die im Digitalformat gespeicherten Fernsehsignale an die Endgeräte 2, 2', 2" übermittelt werden sollen. Dabei werden Qualitätsparameter vom Endgerät des betreffenden Benutzers berücksichtigt. Zum Beispiel werden Endgeräteparameter des Endgeräts 2, 2', 2" des betreffenden Benutzers berücksichtigt, beispielsweise die Anzeigegrösse und/oder -auflösung, der Gerätetyp oder die Übertragungskapazität respektive - geschwindigkeit des betreffenden Endgeräts 2, 2' 2" über das Telekommunikationsnetz 3. Unterschiedliche Übertragungsqualitäten und/oder - formate können vom Endgerät 2, 2' 2" respektive vom Benutzer auch zusammen mit der Anfrage für den Bezug der im Digitalformat gespeicherten Fernsehsignale vom Wiedergabemodul 11 angefordert werden. An dieser Stelle soll darauf hingewiesen werden, dass auch vorgesehen werden kann, dass ein Benutzer neben der Wiedergabequalität auch die Aufzeichnungsqualität bestimmten kann, beispielsweise können die Fernsehsignale so codiert und abgespeichert werden, dass die Bildqualität bei der Wiedergabe der entsprechenden Fernsehqualität, VHS-Qualität (Video Home System) oder DVD-Qualität (Digital Versatile Disk) entspricht.

Der Fachmann wird verstehen, dass verschiedene technische Architekturen möglich sind, gemäss welchen die verschiedenen Module und Datenspeicher des Systems 1 auf einem oder mehreren Computern ausgeführt werden können. Es soll hier insbesondere angeführt werden, dass der Aufzeichnungsspeicher 17 zur Speicherung der im Digitalformat codierten Fernsehsignale und die Benutzerdatenbank 14 gemeinsam mit der Steuerzentrale 10 auf einem Computer ausgeführt werden können und/oder gemeinsam mit dem Wiedergabemodul 11 auf einem Computer ausgeführt werden können oder auf einem oder mehreren für die Steuerzentrale 10 und das Wiedergabemodul 11 zugänglichen separaten Computern ausgeführt werden können.

Abschliessend sei bemerkt, dass der Fachmann verstehen wird, dass funktionale Module die hier als Softwaremodule beschrieben wurden, auch vollständig oder teilweise hardwaremässig ausgeführt werden können.

## Patentansprüche

1. System (1) zum Aufzeichnen und Wiedergeben von Fernsehsignalen mehrerer Fernsehkanäle, umfassend:
eine mit einem Telekommunikationsnetz (3) verbindbare computerbasierte Steuerzentrale (10),
mehrere mit der Steuerzentrale (10) verbundene Fernsehempfänger (12, 13, ..., n) zum Empfangen der Fernsehsignale auf jeweils einem der Fernsehkanäle,
ein oder mehrere mit den Fernsehempfängern (12, 13, ..., n) verbundene Codiermodule (121, 131, ..., n1) zum Codieren der empfangenen Fernsehsignale in ein Digitalformat,
wobei die Steuerzentrale (10) eingerichtet ist zum Entgegennehmen von Aufzeichnungsinstruktionen von Benutzern über das Telekommunikationsnetz (3), zum Speichern der entgegengenommenen Aufzeichnungsinstruktionen, jeweils zugeordnet zu einer Benutzeridentifizierung des betreffenden Benutzers, und zum Speichern der im Digitalformat codierten Fernsehsignale, die zu einem durch die gespeicherten Aufzeichnungsinstruktionen bestimmten Zeitpunkt auf einem durch die gespeicherten Aufzeichnungsinstruktionen bestimmten Fernsehkanal empfangen wurden, jeweils zugeordnet zu der Benutzeridentifizierung, der die betreffenden gespeicherten Aufzeichnungsinstruktionen zugeordnet sind, und
ein Wiedergabemodul (11) zum Übermitteln der im Digitalformat gespeicherten Fernsehsignale über das Telekommunikationsnetz (3), jeweils zur Wiedergabe auf einem Endgerät (2, 2', 2") des Benutzers, der durch die Benutzeridentifizierung identifiziert ist, die den betreffenden gespeicherten Fernsehsignalen zugeordnet ist.

2. System (1) nach Anspruch 1, **dadurch gekennzeichnet, dass** die Steuerzentrale (10) eingerichtet ist, entsprechend den gespeicherten Aufzeichnungsinstruktionen jeweils Steuersignale an einen der verbundenen Fernsehempfänger (12, 13, ..., n) zu übertragen zur Aktivierung des betreffenden Fernsehempfängers (12, 13, ..., n) und/oder zur Selektion eines Fernsehkanals auf dem betreffenden Fernsehempfänger (12, 13, ..., n).

3. System (1) nach einem der Ansprüche 1 oder 2, **dadurch gekennzeichnet, dass** das Telekommunikationsnetz (3) ein Internet Protokoll basiertes Netz ist, dass das Wiedergabemodul (11) eingerichtet ist, die im Digitalformat gespeicherten Fernsehsignale im Streaming-Modus über das Telekommunikationsnetz (3) an das Endgerät (2, 2', 2") des Benutzers zu übermitteln.

4. System (1) nach einem der Ansprüche 1 bis 3, **dadurch gekennzeichnet, dass** die Steuerzentrale (10) eingerichtet ist, die im Digitalformat codierten Fernsehsignale vor deren Speicherung jeweils mit einem kryptografischen Schlüssel zu verschlüsseln, dass das System (1) ein Zugriffskontrollmodul (111) umfasst zum Erzeugen von Bezugsrechten auf die im Digitalformat gespeicherten Fernsehsignale und zum Übermitteln erzeugter Bezugsrechte, die die betreffenden kryptografischen Schlüssel umfassen, über das Telekommunikationsnetz (3) an berechtige Benutzer, und dass das Wiedergabemodul (11) eingerichtet ist, Bezugsrechte von Benutzern über das Telekommunikationsnetz (3) entgegenzunehmen und entsprechend den entgegengenommenen Bezugsrechten die verschlüsselten, im Digitalformat gespeicherten Fernsehsignale an den betreffenden Benutzer zu übermitteln.

5. System (1) nach einem der Ansprüche 1 bis 4, **dadurch gekennzeichnet, dass** das Wiedergabemodul (11) eingerichtet ist, die im Digitalformat gespeicherten Fernsehsignale jeweils abhängig von Qualitätsparametern vom Endgerät (2, 2', 2") des betreffenden Benutzers über das Telekommunikationsnetz (3) an das Endgerät (2, 2', 2") zu übermitteln.

6. System (1) nach einem der Ansprüche 1 bis 5, **dadurch gekennzeichnet, dass** die Steuerzentrale (10) gespeicherte Fernsehprogramminformationen (15) umfasst, und dass die Steuerzentrale (10) eingerichtet ist, von Benutzern Identifizierungsangaben von Fernsehsendungen als Aufzeichnungsinstruktionen über das Telekommunikationsnetz (3) entgegenzunehmen und entsprechend den entgegengenommenen Identifizierungsangaben basierend auf den gespeicherten Fernsehprogramminformationen (15) Aufzeichnungsinstruktionen mit Angaben über Fernsehkanal und Fernsehsendungsidentifizierung und/oder Startzeit/Endzeit respektive Zeitdauer zu speichern.

7. System (1) nach einem der Ansprüche 1 bis 6, **dadurch gekennzeichnet, dass** die Steuerzentrale (10) eingerichtet ist, nach erfolgter Speicherung der im Digitalformat codierten Fernsehsignale entsprechend den gespeicherten Aufzeichnungsinstruktionen, eine elektronische Bereitschaftsnachricht über das Telekommunikationsnetz (3) an das Endgerät (2, 2', 2") des Benutzers zu übermitteln, dessen Benutzeridentifizierung den betreffenden Aufzeichnungsinstruktionen zugeordnet ist.

8. System (1) nach einem der Ansprüche 1 bis 7, **dadurch gekennzeichnet, dass** die Steuerzentrale (10) eingerichtet ist, im Digitalformat gespeicherte Fernsehsignale nach einer definierten Zeitdauer nach ihrer Speicherung automatisch zu löschen, und dass die Steuerzentrale (10) eingerichtet ist, vor der automatischen Löschung automatisch jeweils eine elektronische Warnnachricht über das Telekommunikationsnetz (3) an das Endgerät (2, 2', 2") des Benutzers zu übermitteln, dessen Benutzeridentifizierung den betreffenden gespeicherten Fernsehsignalen zugeordnet ist.

9. System (1) nach einem der Ansprüche 1 bis 8, **dadurch gekennzeichnet, dass** die Steuerzentrale (10) eingerichtet ist, die im Digitalformat codierten Fernsehsignale, die zu einem Zeitpunkt und auf einem Fernsehkanal empfangen wurden, die durch übereinstimmende Aufzeichnungsinstruktionen bestimmt sind, die von mehreren Benutzern entgegengenommen wurden, jeweils nur einmal den Benutzeridentifizierungen der betreffenden mehreren Benutzer gemeinsam zugeordnet abzuspeichern.

10. System (1) nach einem der Ansprüche 1 bis 9, **dadurch gekennzeichnet, dass** die Fernsehempfänger (12, 13, ..., n) eingerichtet sind zum Empfangen digitaler und/oder analoger Fernsehsignale über Kabelfernsehnetze (6) und/oder über Fernsehantennen (4, 5) für terrestrischen Fernsehrundfunk oder Fernsehsatellitenfunk und dass die Steuerzentrale (10) und das Wiedergabemodul (11) jeweils auf verschiedenen, miteinander verbundenen Computern ausgeführt sind, wobei die Steuerzentrale (10) und/oder das Wiedergabemodul (11) Speicher zur Speicherung der im Digitalformat codierten Fernsehsignale umfassen.
